Europäisches Patentamt

European Patent Office

Office européen des brevets

(11) Numéro de publication: **0 207 208**
**A1**

## (12) DEMANDE DE BREVET EUROPEEN

(21) Numéro de dépôt: 85401328.1

(22) Date de dépôt: 01.07.85

(51) Int. Cl.⁴: **C 02 F 1/42**

(43) Date de publication de la demande:
07.01.87 Bulletin 87/2

(84) Etats contractants désignés:
AT BE CH DE FR GB IT LI LU NL SE

(71) Demandeur: FLECK EUROPE SA
Z.I. Avenue Roland Garros
F-75530 Buc(FR)

(72) Inventeur: Mitchell, Herman Charles c/o Société
Fleckenstein
PO Box 1006
Brookfield Wisconsin 53005(US)

(74) Mandataire: Loyer, Bertrand et al,
Cabinet Pierre Loyer 18, rue de Mogador
F-75009 Paris(FR)

(54) Injecteur à débit régulé.

(57) L'invention concerne un agencement à soupape de commande pour la régénération d'un système de traitement d'eau dans lequel l'injecteur de saumure (62-64) fournit un débit de saumure constant indépendant de la pression d'alimentation de l'eau. L'invention comprend des moyens de régulation de débit sensibles à la pression dans le logement de l'injecteur, qui peuvent se présenter sous la forme d'un clapet relié à un diaphragme (56) disposé entre l'entrée d'eau (38) et l'injecteur (62). Le clapet (42), normalement sollicité vers sa position ouverte, est rappelé vers sa position fermée par la pression de l'eau entrante agissant sur le diaphragme, ce qui régule le débit de l'eau qui est envoyé à l'intérieur selon un débit constant prédéterminé.

Fig. 2

EP 0 207 208 A1

## Injecteur à débit régulé.

L'invention est relative aux systèmes de conditionnement d'eau conçus pour fournir une eau adoucie ou traitée de toute autre manière, et concerne en premier lieu les soupapes et les commandes utilisées pour régénérer les systèmes de résine échangeuses d'ions.

Pour régénérer un lit de résine d'un système de conditionnement d'eau, il est souhaitable de faire passer de la saumure au travers du lit de résine selon un débit prédéterminé et uniforme. Dans les endroits où la pression de l'eau est élevée, cette pression provoque un taux de tirage de la saumure qui est trop important, ce qui fait qu'une partie de la résine ne vient pas en contact avec la saumure et n'est pas régénérée par cette dernière. Dans les endroits où la pression d'alimentation de l'eau est trop faible, l'opération de régénération dure trop longtemps, ce qui est également non souhaitable.

Dans les dispositifs antérieurs connus, ne comportant pas de régulation du débit, on crée un vide au moyen d'un venturi disposé sur le circuit d'eau normale. Ce vide provoque une aspiration de la saumure. Quand on fait varier la pression de l'alimentation d'eau, il en résulte une variation de l'aspiration de la saumure de sorte que le taux d'aspiration de la saumure va varier avec le lieu où est placée l'installation.

D'une façon générale dans les dispositifs antérieurs connus, aucune mesure n'est prise pour réguler le débit de l'eau brute au travers des injecteurs de saumure pendant le cycle de régénération. Ceci est le cas du brevet US N° 4 290 451 émis au nom de Fleckenstein et al. , du brevet US N° 3 194 254 émis au nom de Zmek, du brevet US N° 3 183 933 émis au nom de Whitlock et al. et du brevet US N° 3 007 495 émis au nom de Whitlock et al. La régulation du débit d'eau dure pendant le cycle de rinçage rapide est réalisée, dans le brevet US N° 3 225 789 au nom de Thompson, mais au moyen d'un dispositif élastique de commandes de débit.

La présente invention concerne un mécanisme de régulation de débit sensible à la pression disposé à l'intérieur du logement de la soupape de commande de l'adoucisseur d'eau. Le régulateur est disposé en amont de l'injecteur de saumure et régule le débit d'eau brute envoyé à l'injecteur au moyen d'un clapet soumis à la fois à l'action d'un ressort et d'un diaphragme de détection de pression disposé sur son côté en aval. Le clapet est normalement sollicité vers sa position ouverte par son ressort mais une augmentation de la pression sur le diaphragme a pour tendance de fermer le clapet et donc de réduire le débit. Cette boucle de rétro-action stabilise le débit passant par l'injecteur. Ceci de son côté stabilise le taux de tirage de la saumure provenant du réservoir de saumure et passant au travers du lit de résine, et détermine une régénération uniforme du lit de résine indépendamment de la pression d'alimentation de l'eau.

La figure 1 est une vue en coupe détaillée d'un dispositif à soupape de commande de conditionnement d'eau comprenant le mécanisme injecteur de saumure mettant en œuvre la présente invention ;

La figure 2 est une vue en coupe détaillée du dispositif à soupape de commande de conditionnement d'eau, en partie selon la ligne 2-2 de la figure 1.

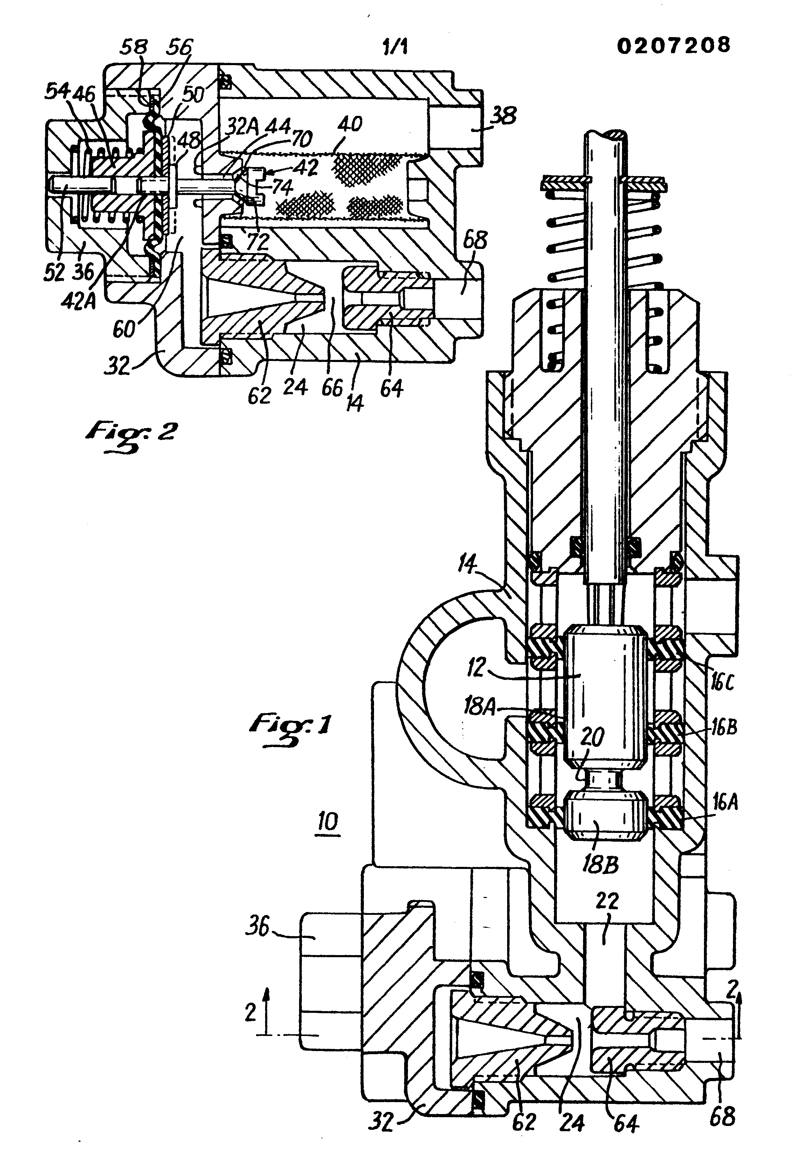

Si l'on se réfère maintenant aux dessins, la figure 1 montre un dispositif à soupape de commande utilisé dans un système de traitement de liquide. Pour régénérer la résine de traitement, la saumure provenant d'un réservoir de saumure (non représenté) est tirée au travers du lit de résine disposé dans la cuve de traitement. La saumure dépose des ions de sodium sur la substance résineuse dans la cuve de traitement et en élimine des ions de calcium et autres ions d'"eau dure". Un système de ce type est illustré dans le brevet US N° 4 374 025 délivré à Loke le 15 février 1983.

Comme on le voit à la figure 1, un piston 12 est monté de façon coulissante dans un logement 14 et vient en contact avec un ensemble de joints 16A, 16B et 16C. Le piston 12 est muni de zones 18A et 18B et d'une gorge 20 entre ces dernières. Le piston 12 est manœuvré de manière connue et non décrite par un système de synchronisation actionné par came pour réguler les divers courants traversant le conditionneur d'eau. La figure 1 montre le piston en position de "service". Pendant le cycle de tirage de la saumure, le piston 12 est déplacé vers le bas par rapport à la position montrée à la figure 1 jusqu'à ce que la gorge 20 soit adjacente au joint 16A qui est le plus en bas. La saumure provenant du réservoir de saumure du système pénètre dans le logement en passant par une ouverture (non montrée) entre les joints 16A et 16B et s'écoule vers l'entrée de saumure 22 en vue de son introduction dans la cavité 24 de l'injecteur.

A la figure 2 est illustrée une vue en coupe de la partie de l'injecteur constituée par la soupape de commande de conditionnement d'eau qui vient juste d'être décrite. Le logement 32 du régulateur est relié au logement 14. Le couvercle 36 du régulateur est fixé à son logement 32.

Le logement 14 est pourvu d'une entrée d'alimentation d'eau 38 pour admettre l'eau provenant de la source d'alimentation, et d'une sortie 68 pour laisser sortir un mélange d'eau et de saumure. Un écran de filtration cylindrique 40 est disposé sur le parcours du courant entre l'entrée 38 et la sortie 68. Un régulateur de débit illustré sous forme d'un clapet 42 est monté dans le logement 32, coaxialement à l'écran de filtration 40. Le clapet 42 est monté de façon coulissante à l'intérieur du passage 44 et est fixé à un siège de ressort 46 au moyen du filetage 42A, de l'épaulement 48 et de la rondelle 50. Le siège de ressort 46 est fixé de manière à guider la tige 52 qui est engagée à coulissement dans le couvercle 36 du régulateur. Un ressort 54 est disposé entre le couvercle 36 du régulateur et le siège à ressort 46 et agit de façon à solliciter le siège de ressort 46 vers la droite, comme montré à la figure 2, rappelant ainsi le clapet 42 vers sa position ouverte. Le diaphragme 56, fabriqué en un matériau élastomère approprié, est disposé entre la rondelle 50 et le siège 46. La périphérie du diaphragme 56 est maintenue entre le corps 32 du régulateur et le couvercle 36 de ce régulateur au moyen d'une bague de retenue 58. Des saillies 32A (parties du logement 32) permettent le passage de l'eau quand le clapet 42 est dans sa position totalement ouverte.

La chambre 60 est disposée sur le parcours suivi par le courant entre le passage 44 et la buse d'injecteur 62. La buse d'injecteur 62 est montée coaxialement à un étranglement 64 et en est espacée de manière à former entre eux un venturi 66. La sortie 68 est située en aval de l'étranglement 64.

Pendant le cycle de tirage de la saumure, de l'eau fraîche provenant de l'alimentation d'eau normale pénètre dans le dispositif par l'entrée 38 et traverse l'écran de filtration 40 à la pression de l'alimentation de l'eau. L'eau traverse ensuite le clapet 42, le passage 44, la chambre 60 et la buse d'injecteur 62 ainsi que le col 64. L'effet venturi dans le col de l'injecteur crée un vide en 66 qui aspire la solution de saumure depuis le réservoir de saumure dans la cavité 24, puis en la faisant passer par le col 64 de l'injecteur et sortir par la sortie 68.

Si l'installation est disposée en un emplacement où la pression de l'alimentation d'eau est excessive, le débit qui traverse le logement est indûment élevé et provoque un tirage de saumure qui est trop rapide et inacceptable. Mais grâce au présent agencement, la pression plus forte agit sur le diaphragme 56 par l'intermédiaire de la rondelle 50 en vue de s'opposer à la force de sollicitation du ressort 54 et sollicite le clapet 52 vers la gauche, comme montré à la figure 2. Quand ce mouvement a lieu, la surface tronconique 70 du clapet 42 est tirée en direction du siège de soupape 72, ce qui limite la dimension de l'ouverture annulaire 74 existant entre ces éléments. Cette action limite le débit de l'eau qui traverse l'injecteur, et contrôle ainsi le taux de tirage de la saumure. Ce mécanisme crée une simple boucle de rétroaction grâce à laquelle la pression accrue de l'eau agit en vue de limiter le débit de l'eau et donc de stabiliser le débit selon un taux optimal et modéré. Dans les régions où la pression de l'eau est plus basse, le clapet reste totalement ouvert et l'eau passe de l'entrée 38 à la sortie 68 selon le débit prédéterminé. On peut choisir le ressort 54 en fonction du débit désiré et de manière qu'il présente l'une quelconque d'un certain nombre de raideurs permettant d'obtenir les résultats désirés.

Diverses caractéristiques de l'invention ont été montrées et décrites particulièrement en liaison avec le mode de réalisation de l'invention qui a été illustré. Mais l'on comprendra que cet agencement particulier n'est qu'illustratif et que l'interprétation la plus complète de l'invention n'est limitée que par le champ d'application des revendications annexées.

## Revendications de brevet

1. Agencement à soupape de commande pour appareil de traitement de liquide comprenant un logement (32) définissant une entrée d'eau (38), une entrée de saumure (22) et une sortie (68) ; un dispositif à injecteur (62-64) disposé dans ledit logement (32) entre ladite entrée d'eau et ladite sortie, le dispositif à injecteur comprenant une buse (62) en communication avec ladite entrée d'eau (38), un col d'étranglement (64) espacé de la buse, et une chambre (66) définie entre ladite buse et ledit col d'étranglement, ladite chambre étant reliée à ladite entrée de saumure (22), et des moyens de régulation de débit sensibles à la pression disposés dans ledit logement (32) entre ladite entrée d'eau (38) et ladite buse d'injecteur (62) de manière à agir en réponse à la pression de l'eau fournie à l'entrée d'eau pour réguler le débit de l'eau au travers de ladite buse (62) selon une valeur constante et prédéterminée.

2. Agencement à soupape de commande pour appareil de traitement de liquide selon la revendication 1, dans lequel lesdits moyens de régulation de débit sensibles à la pression comprennent un clapet (42) disposé entre ladite entrée d'eau et ledit injecteur pour faire varier ledit débit.

3. Agencement à soupape de commande pour appareil de traitement de liquide selon la revendication 2, dans lequel lesdits moyens de régulation de courant sensibles à la pression comprennent un diaphragme (56) relié audit clapet (42) de manière à amener ce clapet à limiter ledit débit quand la pression de l'eau dépasse une valeur prédéterminée.

Fig. 2

Fig. 1

10

Office européen
des brevets

## RAPPORT DE RECHERCHE EUROPEENNE

EP 85 40 1328

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.4) |
|---|---|---|---|
| X | US-A-3 473 481 (BRANE) * Colonne 1, lignes 21-55; colonne 4, revendications 1-3 * | 1 | C 02 F 1/42 |
| X | US-A-3 139 041 (TECHLER) * Colonnes 3,4; revendications 1,2 * | 1 | |
| A | DE-C- 973 464 (REIMERS) * Page 1, ligne 1 - page 2, ligne 9 * | 2,3 | |
| A | FR-A-2 189 671 (DEUTSCHE VERGASER) * Page 3 * | 2,3 | |
| A | US-A-2 386 051 (KEMPTON) * Page 2, revendications 1,2 * | 2,3 | **DOMAINES TECHNIQUES RECHERCHES (Int. Cl.4)** C 02 F G 05 D |

Le présent rapport de recherche a ete etabli pour toutes les revendications

| Lieu de la recherche LA HAYE | Date d'achevement de la recherche 27-02-1986 | Examinateur WENDLING J.P. |
|---|---|---|